# EUROPEAN PATENT APPLICATION

(11) **EP 2 624 167 A1**
(43) Date of publication of application: **07.08.2013**
(21) Application number: 12153926.6
(22) Date of filing: 03.02.2012
(51) Int. Cl.: G06K 7/00, G06K 19/077

(54) **Card adaptor**

(71) Applicant: Research In Motion Limited, Waterloo, ON N2L 3W8 (CA)
(72) Inventor: Braun, Petra, 44799 Bochum (DE)
(74) Representative: Fennell, Gareth Charles

(57) **Abstract**

Card adaptor apparatus are disclosed herein. An example card adaptor apparatus (100) includes a first frame (102) having an outer perimeter configured to define a first card and an opening configured to receive a second card having a dimensional profile that is smaller than a dimensional profile of the first card. A first adhesive (216) substantially spans across the entire opening (212) of the first frame (102) to retain the second card in the opening (212) of the first frame (102).

## Description

### FIELD OF DISCLOSURE

The present disclosure relates to card adapters, including but not limited to, card adaptor apparatus.

### BACKGROUND

Electronic devices such as, for example, portable electronic devices often connect to a network (e.g., a mobile network). These devices often employ a smart card or Universal Integrated Circuit Card (hereinafter UICC) to identify a subscriber for network access. For example, a UICC can store a Subscriber Identity Module (e.g., a SIM card, USIM card, RUIM, CSIM, etc.) that authenticates a subscriber to a network such as a mobile network.

SIM cards or UICC's are typically provided in standardized form factors such as, for example, a plug-in UICC (1FF), a mini-UICC (2FF) and a micro-UICC (3FF). Each of the various different standardized form factor cards operates or interacts with a dedicated smart card interface configured to interface with the specific standardized form factor UICC or SIM card. In other words, a first SIM card configured in a first form factor is typically not used with an input device or card reader adapted to receive a second SIM card confirmed in a second form factor. Doing so may cause damage to the input device, which can affect communication between the SIM card and the input device.

Therefore, an adaptor is typically employed to enable a SIM card or UICC having a smaller form factor to interface with an input device or card reader adapted to receive a SIM card or UICC having a larger form factor. Some known adaptors, however, often cause damage to electrical connectors of the input device.

### BRIEF DESCRIPTION OF THE DRAWINGS

FIG. 1 illustrates an example card adaptor apparatus disclosed herein.

FIG. 2 is an exploded view of the example card adaptor apparatus of FIG. 1

FIG. 3 illustrates the card adaptor apparatus of FIGS. 1 and 2 having a cover portion removed.

FIG. 4 illustrates the card adaptor apparatus of FIGS. 1-3 with a first UICC attached to the card adaptor apparatus.

FIG. 5 is a plan view of the card adaptor apparatus of FIGS. 1-4 having the first UICC attached to the card adaptor apparatus.

FIG. 6 is a side view of the example card adaptor apparatus of FIGS. 1-5 having the first UICC attached to the card adaptor apparatus.

FIG. 7 is a plan view of the card adaptor apparatus of FIGS. 1-4 having a second UICC attached to the card adaptor apparatus via a modular interface.

FIG. 8 is a side view of the example card adaptor apparatus of FIGS. 1-3 and FIG. 7 having the second UICC attached to the card adaptor apparatus.

FIG. 9A illustrates another example card adaptor apparatus disclosed herein.

FIG. 9B illustrates an exploded view of the card adaptor apparatus of FIG. 9A.

FIG. 10 illustrates an example dimensional profile of the example card adaptor apparatus of FIGS. 9A and 9B.

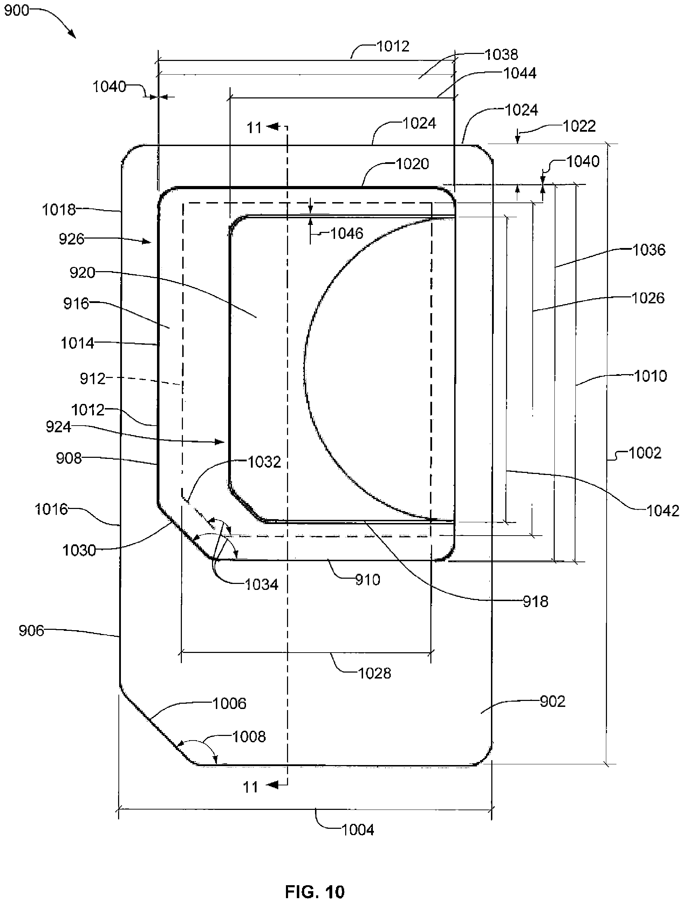

FIG, 11 is a cross-sectional view of the example card adaptor apparatus taken along line 11-11 of FIG. 10.

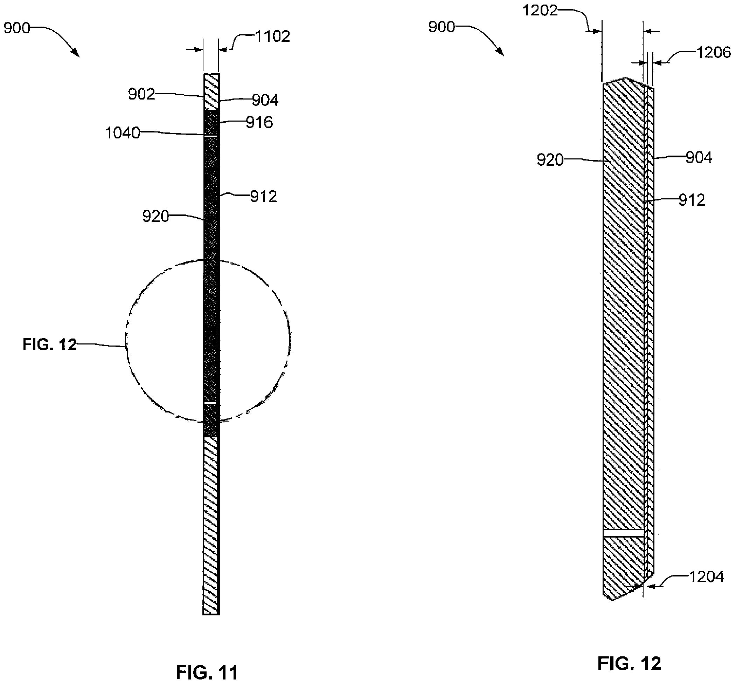

FIG. 12 is an enlarged, partial view of the example card adaptor apparatus shown in FIG. 11.

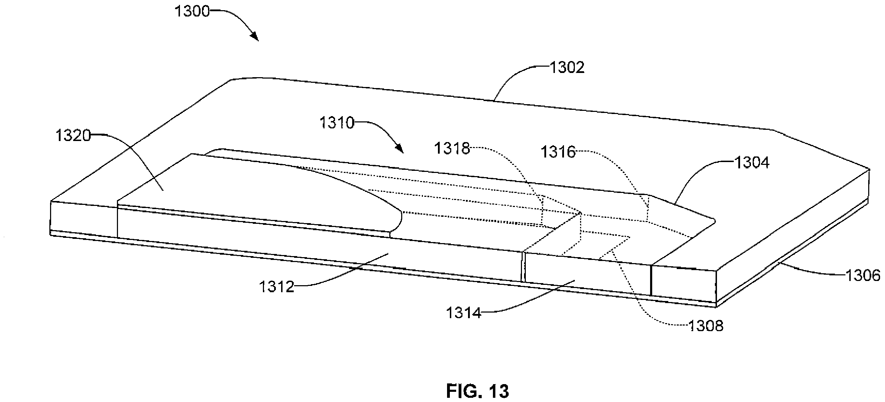

FIG. 13 illustrates another example card adaptor apparatus disclosed herein.

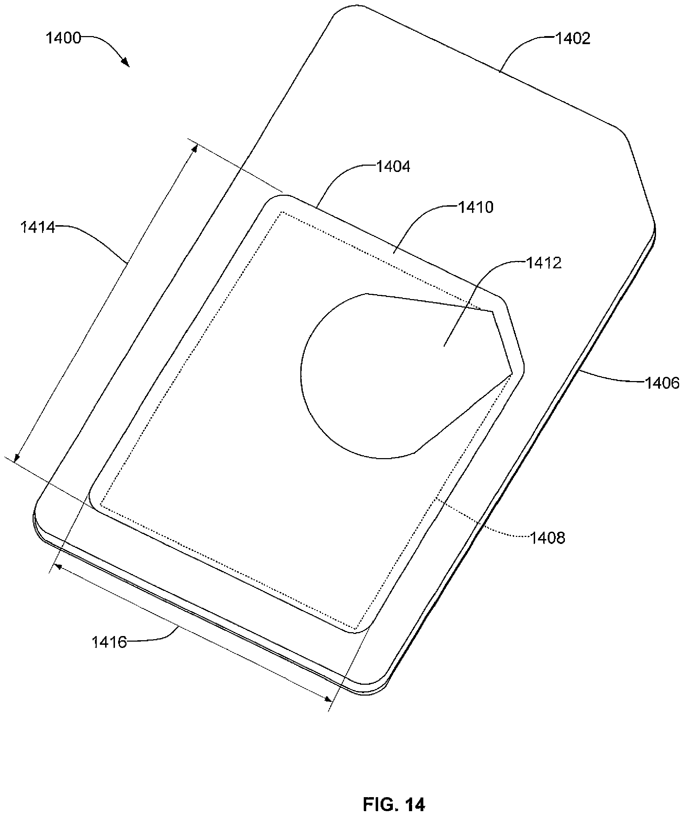

FIG. 14 illustrates another example card adaptor apparatus disclosed herein.

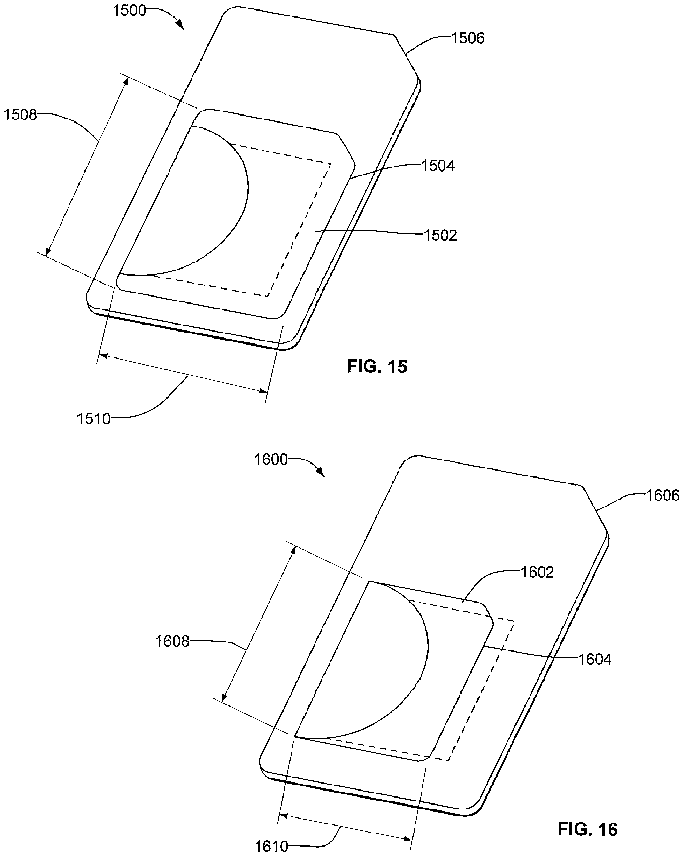

FIG. 15 illustrates another example card adaptor apparatus disclosed herein.

FIG. 16 illustrates another example card adaptor apparatus disclosed herein.

### DETAILED DESCRIPTION

Certain examples are shown in the above-identified figures and described in detail below. In describing these examples, like or identical reference numbers are used to identify common or similar elements. The figures are not necessarily to scale and certain features and certain views of the figures may be shown exaggerated in scale or in schematic for clarity. Additionally, several examples have been described throughout this specification. Any features from any example may be included with, a replacement for, or otherwise combined with other features from other examples.

Smart cards or universal integrated circuit cards (UICCs) are often used as a Subscriber Identity Module (e.g., SIM card, USIM card, RUIM card or CSIM card) in a portable electronic device such as a mobile device. A Subscriber Identity Module is a network access application that is stored in the UICC to authenticate a subscriber to a network.

Typically, a UICC includes a body to support an integrated circuit or microprocessor and a plurality of electrical contacts to enable communication between the microprocessor and a host (e.g., a computer, a mobile device, a non-mobile device, a remote terminal, etc.). The host typically employs an input device (e.g., a card reader) to accept the body and complete a circuit with the electrical contacts to enable communication (e.g., transfer data) between the UICC and the host.

Currently, physical characteristics or parameters (e.g., a profile or dimensional envelope) of conforming UICCs are configured according to certain standards or form factors provided by, for example, the European Telecommunications Standards Institute (ETSI) and the International Standard Organization (ISO). In particular, the form factor standards are defined by International Standard Organization ISO/IEC 7810, ISO/IEC 7816-1, ISO/IEC 7816-2, ISO/IEC 7816-3 and/or Technical Specification of the European Telecommunications Standards Institute ETSI TS 102 221. For example, some current standards define an ID-1 card standard, a plug-in UICC standard and a mini-UICC standard. Each of the different form factors defines a different dimensional envelope or profile. More specifically, the ID-1 card standard provides a first dimensional profile that is larger than a dimensional profile of the plug-in UICC and the mini-UICC, and the plug-in UICC standard provides a dimensional profile that is larger than the dimensional profile of the mini-UICC. However, in some examples, other non-conforming cards or non-standard cards may have any other profiles, sizes or shapes.

Additionally, an input device or card reader is typically configured to receive a dedicated UICC form factor standard (e.g., a UICC conforming to only one standard). In particular, an input device or card reader is often configured with relatively tight tolerance specifications in accordance with a conforming UICC standard to prevent movement of the UICC and maintain proper alignment of the UICC when the UICC is coupled to the input device. For example, some known input devices often employ a slot, an opening or a tray sized in accordance to a specific or dedicated UICC form factor standard. Such tight tolerances are needed to ensure proper alignment between electrical contacts carried by the UICC and electrical connectors of the card reader. Movement or misalignment of the UICC within the input device may affect an electrical connectivity between the UICC and the input device and/or may cause damage to (e.g., the electrical connectors of) the input device.

However, electronic devices or mobile data devices employ the various conforming UICCs noted above. As a result, due to the various available form factor standards and the inability of an input device to receive multiple conforming UICCs, a user having multiple mobile devices each configured to receive a different sized UICC or SIM, for example, may need an adaptor to use a single SIM card or UICC with the various mobile devices.

For example, an adaptor may be dimensioned according to a larger UICC form factor standard (e.g., the ID-1 form factor, the plug-in UICC, etc.) and may be configured to receive a smaller UICC form factor card (e.g., a mini-UICC). Some known adaptors enable a smaller UICC to be coupled to the adaptor via, for example, a snap-fit and/or friction fit connection. For example, the adaptor may include one or more clips to receive the smaller UICC. However, a spring effect of the clips may wear or weaken after repeated use, causing the smaller UICC to dislodge or decouple from the adaptor during insertion of the adaptor in the card reader. In some examples, due to the relatively small dimensional thickness and/or height of a smaller UICC (e.g., a conforming mini-UICC), the smaller UICC may bend or flex when the adaptor is inserted in the card reader. As a result, such bending may cause the smaller UICC to dislodge or decouple from the clips during insertion and become misaligned in the card reader. As noted above, a loose fitting and/or misaligned UICC card in a card reader may cause damage to the UICC and/or the card reader.

In some known instances, some adaptors that are configured to receive a smaller UICC card often violate a maximum dimensional thickness provided by certain standards such as those noted above. As a result, violating a maximum dimensional thickness standard may cause the adaptor and the violating UICC card to bind in a card reader during removal and/or insertion of the adaptor relative to an opening of the card reader. Further, violating a maximum dimensional thickness adjacent a front edge or lead-in end or portion of the adaptor may cause damage to the electrical connectors of the card reader during insertion. In other words, a housing portion of the adaptor violating a maximum dimensional thickness proximate to a leading edge of the adaptor may catch or engage the electrical connectors and cause them to plastically deform during insertion of the adaptor in the card reader.

Example device card adaptor apparatus described herein enable a card such as, for example, a SIM card, a UICC card, a smart card, a memory card, a chip card, an integrated circuit card and/or any other card of a first configuration to be used with an input device or card reader of a second configuration different than the first configuration. For example, example card adaptor apparatus disclosed herein enable a smaller sized UICC to be used with an input device or card reader configured to receive a larger sized UICC. As a result, example card adaptor apparatus disclosed herein can enable a smaller sized UICC (e.g., a conforming mini-UICC) to be reusable as a larger UICC (e,g., a conforming plug-in UICC).

In some examples, the card adaptor apparatus disclosed herein may be configured to conform to various form factor standards provided by, for example, ISO/IEC 7810, ISO/IEC 7816-1, 7816-2, 7816-3 and/or ETSI TS 102 221. For example, the example card adaptor apparatus may include a frame that conforms to a card standard such as, for example, a credit card sized UICC standard or a plug-in UICC standard provided by ISO/IEC 7810, ISO/IEC 7816-1 and/or 7816-2. Additionally or alternatively, the example card adaptor apparatus disclosed herein may be configured to receive a smaller conforming UICC such as a conforming mini-UICC and/or other non-conforming UICCs.

In some examples, the example card adaptor apparatus disclosed herein may be configured to receive a UICC that deviates from the standards provided by ISO/IEC 7816-2 and 7816-3 and/or ETSI TS 102 221. For example, the card adaptor apparatus disclosed herein may be configured to receive a SIM card or UICC that is dimensioned (e.g., having a length and/or a width) smaller than the smallest conforming UICC form factor standard (e.g., a mini-UICC) that is currently defined by ISO/IEC 7816-2 and 7816-3 and/or ETSI TS 102 221. In some examples, the example card adaptor apparatus may be configured to receive other types of cards such as, for example, smart cards, memory cards, integrated circuit cards and/or any other cards.

In some examples, the example card adaptor apparatus described herein may employ a modular interface to enable the example card adaptor apparatus to receive at least a first card of a first configuration (e.g., a conforming mini-UICC) and a second card of a second configuration different (e.g., smaller than) from the first configuration. In some examples, the modular interface includes a secondary frame portion that is removable coupled to the card adaptor apparatus. For example, the card adaptor apparatus can receive a first card when the secondary frame portion is removed from the card adaptor apparatus, and the card adaptor apparatus can receive a second card different than the first card when the secondary frame portion is coupled to the card adaptor apparatus.

Additionally or alternatively, the example card adaptor apparatus disclosed herein provide a flexible card adaptor apparatus to allow a card (e.g., a UICC) coupled thereto to bend or flex when interfacing with an input device. In particular, the example card adaptor apparatus disclosed herein allow for bending or flexing of the card adaptor apparatus and the card without causing the card from decoupling or detaching from the card adaptor apparatus.

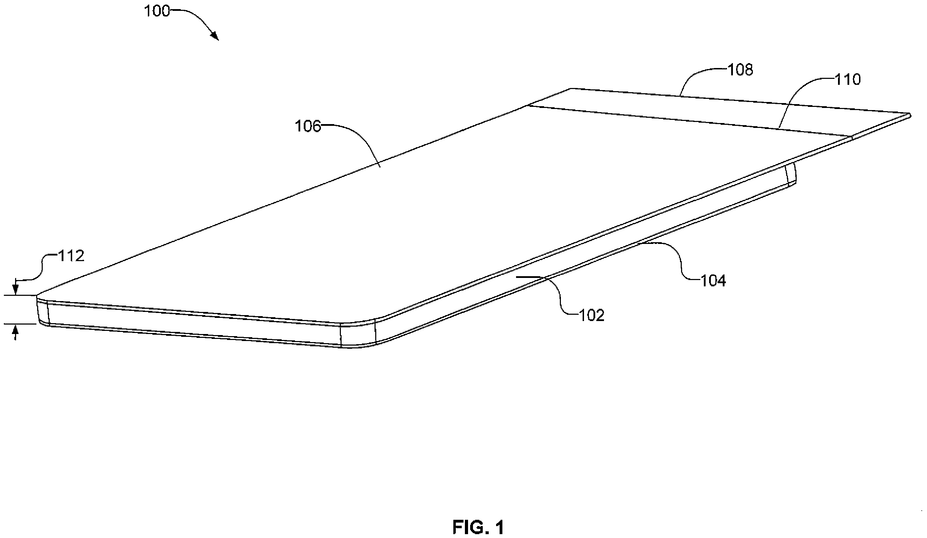

FIG. 1 illustrates an example device card adaptor apparatus 100 disclosed herein. The example card adaptor apparatus 100 of FIG. 1 includes a first adaptor or frame 102 positioned between a base 104 and a cover or film 106 (e.g., a foil). When the cover 106 is removed from the frame 102, the frame 102 enables a card (e.g., a UICC) to be used with an input device or card reader configured to receive a larger sized card (e.g., a larger UICC) defined by the frame 102. Thus, the example card adaptor apparatus 100 enables a smaller sized card (e,g., a conforming mini-UICC) to be reusable as a larger card (e.g., a conforming plug-in UICC).

The frame 102 and/or the base 104 of the illustrated example may be relatively flexible, robust rigid members that may be composed of, for example, a plastic material or composite such as, for example, Polyvinyl Chloride (PVC), acrylonitrile-butadiene-styrene (ABS), Polyethylene terephthalate (PET), Polyimide (PI), Polyethylene Terephthalate Glycol (PETG), high brittle resistant materials and/or any other suitable material such as, for example, a similar material used to produce current conforming SIM cards or UICCs. The frame 102 and/or the base 104 may be formed via, for example, injection molding, sheet material stamping and lamination and/or any other suitable manufacturing process(es).

In some examples, the frame 102, the base 104 and the cover 106 may be configured to define a dimensional thickness 112 that is sized to exceed an opening of a standard input device or card reader (e.g., a standard SIM-card reader). For example, the dimensional thickness 112 may be greater than a thickness of a card such as a conforming UICC form factor standard (e.g., a mini-UICC) that is currently defined by ISO/IEC 7816-2 and 7816-3 and/or ETSI TS 102 221 so that the adaptor apparatus 100 cannot be inserted in a card reader adapted to receive the particular conforming UICC when the cover 106 is attached to the frame 102. As a result, an unintended insertion of the adaptor apparatus 100 into an input device or SIM-card opening of a mobile device can be avoided when the cover 106 is coupled to the frame 102. To interface with the input device, the cover 106 is removed from the frame 102. Further, in some examples, if the dimensional thickness 112 is less than an opening of an input device, the tab 108 and/or the cover 106 may be composed of a material having substantially greater flexibility than the frame 102 and/or the base 104 (e.g., a material substantially weaker than the material of the frame 102 and the base 104). As a result, if the adaptor apparatus 100 is inserted into an input device, the tab 108 and/or the cover 106 will not cause damage to, for example, electrical contacts of the input device or card reader.

To facilitate removal of the cover 106 from the frame 102, the cover 106 may include a tab 108 (e.g., an integral tab). Further, a perforation or crease 110 (e.g., a fold line) may be included to enable the tab 108 to flex relative to the cover 106. Although not shown, the cover 106 and/or the tab 108 may include indicia such as, for example, a logo, instructions to operate the card adaptor apparatus, and/or any other indicia. The cover 106 of the illustrated example may be a tape or any other suitable cover that can attach to the frame 102.

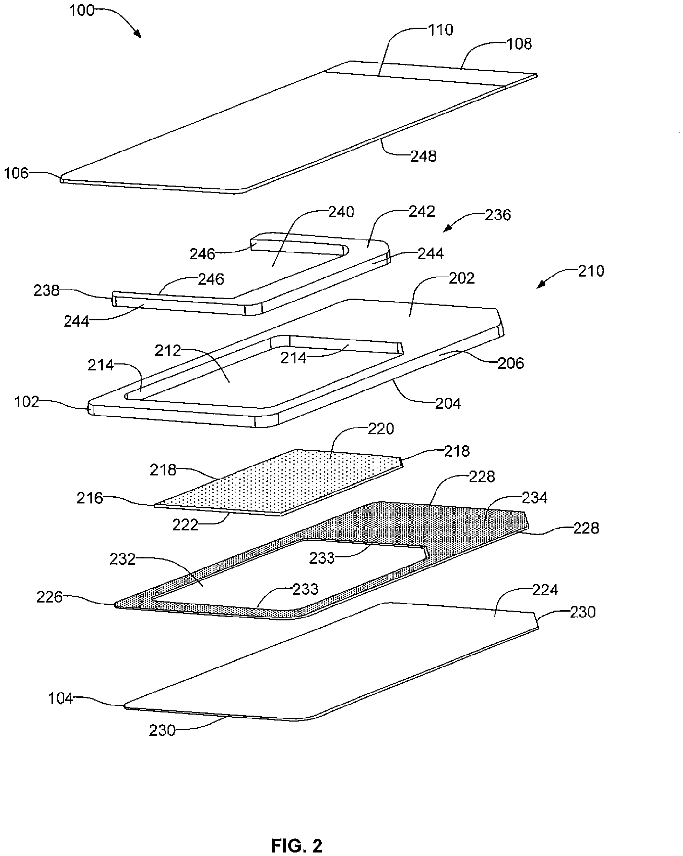

FIG. 2 illustrates an exploded view of the example card adaptor apparatus 100 of FIG. 1. As shown in FIG. 2, the frame 102 defines a first surface or front side 202 and a second surface or rear side 204 opposite the first side 202. As shown in FIG. 2, the frame 102 of the illustrated example includes a generally rectangular shape having outer peripheral edges 206 defining the first and second surfaces 202 and 204. In the illustrated example of FIG. 2, the outer edges 206 provide a first perimeter that conforms to a first UICC form factor standard such as, for example, an ID-0000 (e.g., a plug-in UICC) provided by ISO/IEC 7810, ISO/IEC 7816-1 and/or 7816-2. In other examples, the first perimeter may conform to other form factor standards such as, for example, an ID-1 card standard (e.g., credit card sized UICC) or any other cards such as, for example, memory cards, smart cards, etc. Thus, in this example, the frame 102 may be used to define or implement a first UICC 210.

In the illustrated example, the frame 102 defines an opening or cavity 212 between the first and second surfaces 202 and 204 of the frame 102. The opening 212 defines inner perimeter edges 214 sized or configured to receive a card such as, for example, a UICC or SIM card. For example, the opening 212 of the frame 102 may be configured or sized to receive a card (e.g., a mini-UICC) formed in accordance with current standards provided by ISO/IEC 7810, ISO/IEC 7816-2 and 7816-3 and/or ETSI TS 102 221. However, in other examples, the inner edges 214 of the opening 212 may be configured to receive any other card such as, for example, a smart card, memory card, etc. The frame 102 and the opening 212 may be formed via, for example, injection molding and/or any other suitable manufacturing process(es).

As shown in FIG. 2, the card adaptor apparatus 100 includes a first adhesive 216 positioned or aligned relative to the opening 212 of the frame 102. In particular, the first adhesive 216 covers or spans across substantially the entire opening 212 of the frame 102 (e.g., between approximately 60% and 100% of the opening 212) when the first adhesive 216 is positioned relative to the opening 212. More specifically, the first adhesive 216 may extend substantially across the opening 212 proximate to, but not engaging, the inner edges 214 of the opening 212. For example, an annular gap may be formed between outer edges of the first adhesive 216 and the inner edges of the opening 212. In some examples, the first adhesive 216 may extend substantially across the opening 212 to engage the second surface 204 of the frame 102 proximate to the inner edges 214. The first adhesive 216 has a generally rectangular shape or profile. As shown in FIG. 2, the first adhesive 216 has outer edges 218 that define a profile or shape substantially similar to the profile or shape defined by the inner edges 214 of the opening 212. However, in other examples, the first adhesive 216 may have any other shape or profile (e.g., square, circular, oval, etc.).

The first adhesive 216 of the illustrated example is a double-sided adhesive film. For example, a card (e.g., a UICC) may adhere to a first surface 220 of the first adhesive 216 by pressing the card against the first surface 220. Additionally, the first adhesive 216 enables a card to be removed and/or reattached numerous times. Thus, the adhesion strength or tackiness of the first adhesive 216 does not wear after a first or initial use. The first adhesive 216 may be a film, a pad, a tape, a laminate, a tacky adhesive and/or other material providing an adhesive characteristic that maintains significant adhesion strength and/or tackiness after repeated coupling and decoupling of a card relative to the first adhesive 216.

In the illustrated example, the base 104 retains or positions the first adhesive 216 relative to the opening 212 of the frame 102. In particular, the base 104 retains the first adhesive 216 such that the first surface 220 of the first adhesive 216 is in communication with the opening 212 of the frame 102 and a second surface 222 of the first adhesive 216 opposite the first surface 220 couples (e.g., adheres) to an inner surface 224 of the base 104.

To attach the base 104 to the frame 102 and, thus, position the first adhesive 216 relative to the opening 212 of the frame 102, the card adaptor apparatus 100 employs a second adhesive 226 (e.g., a double-sided adhesive). More specifically, the second adhesive 226 is an adhesive film that attaches the inner surface 224 of the base 104 to the second surface 204 of the frame 102. The second adhesive 226 has an adhesion strength characteristic that is substantially stronger than an adhesion strength characteristic of the first adhesive 216. For example, the second adhesive 226 may permanently attach the base 104 to the frame 102 (e.g., via a lamination process) such that the base 104 is fixed to the frame 102.

The second adhesive 226 may have a generally rectangular shape or profile. As shown in FIG. 2, the second adhesive 226 has outer edges 228 that define a profile or shape substantially similar to the profile and shape defined by the outer edges 206 of the frame 102 and/or outer edges 230 of the base 104. In this example, the base 104 has a dimensional profile or shape that is substantially similar to the dimensional profile or shape of the frame 102 (e.g., a shape formed by the outer edges 206). Additionally, a dimensional profile, size or perimeter of the second adhesive 226 may be substantially equal to or less than a dimensional profile, size or perimeter of the frame 102 and/or a dimensional profile or perimeter of the base 104.

The second adhesive 226 also includes an opening or passageway 232 to allow the first adhesive 216 to be in communication with the opening 212 of the frame 102. In this manner, the first adhesive 216 can be positioned adjacent the second adhesive 226 without interference from the second adhesive 226. Additionally or alternatively, the passageway 232 of the second adhesive 226 provides a larger sized opening compared to the opening 212 of the frame 102. In some examples, inner edges 233 of the passageway 232 substantially align (e.g., are adjacent to) the respective inner edges 214 of the opening 212 when the second adhesive 226 is coupled to the frame 102. In this manner, the second adhesive 226 substantially covers or spans the second surface 204 of the frame 102 but does not overlap with the opening 212 of the frame 102 and/or the first adhesive 216.

When the card adaptor apparatus 100 is assembled, the first adhesive 216 is positioned (e.g., nests) relative to or within the passageway 232 of the second adhesive 226. Thus, both the first and second adhesives 216 and 226 are positioned between the frame 102 and the base 104. Although both the first and second adhesives 216 and 226 are disposed between the base 104 and the frame 102, the second adhesive 226 is not in contact with (e.g., does not engage) and/or does not interfere with the first adhesive 216.

In some examples, the first surface 220 of the first adhesive 216 is substantially flush with a surface 234 of the second adhesive 226 when the first and second adhesives 216 and 226 are coupled to the base 104. As a result, the first and second adhesives 216 and 226 effectively provide an adhesive pad having a first adhesion characteristic (e.g., a non-permanent adhesion characteristic) and a second adhesion characteristic (e.g., a permanent adhesion characteristic) where the second adhesion characteristic is different from (e.g., stronger than) the first adhesion characteristic. In some examples, the first and second adhesives 216 and 226 may be a unitary piece of film or membrane having a first adhesion characteristic and a second adhesion characteristic different than the first adhesion characteristic. The base 104, the first adhesive 216, the second adhesive 226, and the frame 102 may be coupled or assembled via, for example, a lamination manufacturing process(es). In some examples, the first adhesive 216 and the second adhesive 226 may be a unitary piece or structure having one adhesive characteristic (e.g., a sheet or film).

In the illustrated example of FIG. 2, the frame 102 includes a modular interface 236 to enable the frame 102 to receive at least a first card (e.g., a first UICC) having a first configuration and a second card (e.g., a second UICC) having a second configuration different than the first configuration of the first card. In particular, the first card may have a dimensional profile or shape different than (e.g., that is smaller) the dimensional profile or shape of the second card. Thus, the modular interface 236 configures the opening 212 of the frame 102 to allow the frame 102 to receive various cards having different sizes or profiles.

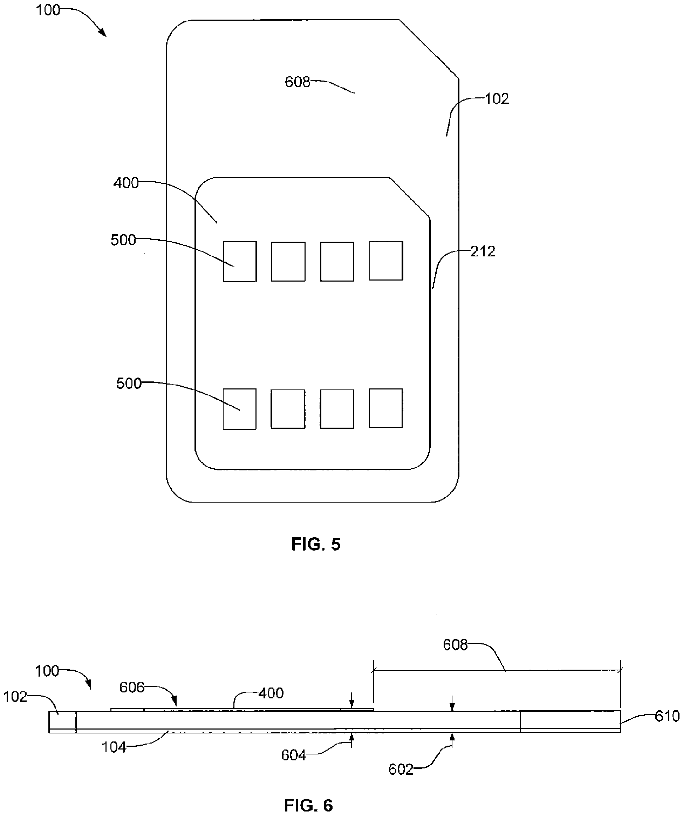

The example modular interface 236 employs a second adaptor or auxiliary frame 238 to be removably coupled to the opening 212 of the frame 102 via the first adhesive 216 in communication with the opening 212. More specifically, the auxiliary frame 238 may be positioned in the opening 212 of the frame 102 to define a second opening 240 of the frame 102. The auxiliary frame 238 of the illustrated example effectively reduces the size of opening 212 to enable a smaller card (e.g., a smaller UICC) to couple to the frame 102 with a relatively tight fit connection. When coupled to the frame 102, a first or upper surface 242 of the auxiliary frame 238 may be substantially flush with the first surface 202 of the frame 102. As described below in connection with FIG. 6, the auxiliary frame 238 does not impact or affect a dimensional thickness tolerance of the frame 102.

As shown in FIG. 2, the auxiliary frame 238 has a U-shaped profile or dimensional shape. Outer edges 244 define a profile or shape that is substantially similar to the profile or shape defined by the inner edges 214 of the opening 212. Similarly, inner edges 246 of the auxiliary frame 238 define a profile or shape that is substantially similar to a shape of at least a portion of a card (e.g., a UICC) to be disposed in the second opening 240. Thus, the outer edges 244 of the auxiliary frame 238 may be configured to conform to a first card having a first configuration (e.g., a mini-UICC) and the inner edges 246 may conform to a second card that may be smaller than the first card configuration defining the outer edges 244. Thus, the frame 102 may receive a first card when the auxiliary frame 238 is removed from the opening 212, and the frame 102 may receive a second card different than the first card when the auxiliary frame 238 is positioned in the opening 212.

The cover 106 is positioned over the first adhesive 216 and attaches to the first surface 202 of the frame 102 and/or to the upper surface 242 of the auxiliary frame 238. Thus, the cover 106 does not engage or contact the first adhesive 216. The cover 106 may include an adhesive surface 248 (e.g., a one-sided adhesive) to couple or attach the cover 106 to the frame 102 and/or the auxiliary frame 238. In some examples, the auxiliary frame 238 may be removed from the opening 212 of the frame 102 by pulling the tab 108 to remove the cover 106 from the frame 102. If the auxiliary frame 238 is needed, the auxiliary frame 238 may be removed from the surface 248 of the cover 106 and repositioned in the opening 212 of the frame 102. In some examples, the auxiliary frame 238 may be attached to (e.g., the inner edges 214 of) the frame 102 via, for example, a punch out feature (e.g., a tab). Thus, when the cover 106 is removed from the frame 102, the auxiliary frame 238 remains positioned in the opening 212. If the auxiliary frame 238 is not needed, the auxiliary frame 238 is separated from (e.g., the inner edges 214 of) the frame 102 and the auxiliary frame 238 is removed from the opening 212. In other examples, the auxiliary frame 238 may not be included and the opening 212 of the frame 102 may be formed or configured to receive a dedicated card conforming to only one standard, profile or size.

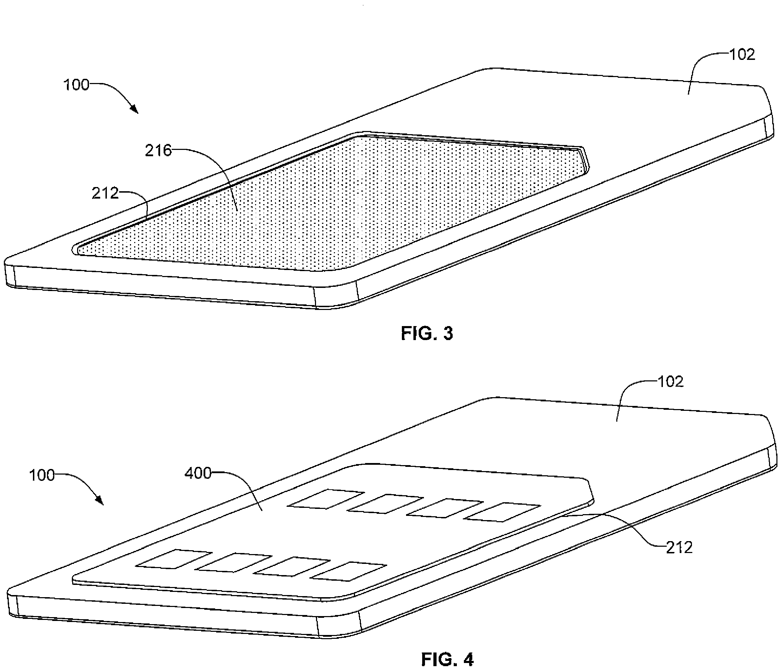

FIG. 3 illustrates the example card adaptor apparatus 100 of FIGS. 1 and 2 having the cover 106 and the auxiliary frame 238 removed from the frame 102. As noted above, the first adhesive 216 is exposed or in communication with the opening 212 when the cover 106 is removed.

FIG. 4 illustrates the example card adaptor apparatus 100 of FIG. 3 having an example UICC or SIM card 400 coupled to the card adaptor apparatus 100. Once the cover 106 is removed, the UICC 400, which is configured to the opening 212 of the frame 102, may be positioned in the opening 212 and attached to the frame 102 via the first adhesive 216.

FIG. 5 is a plan view of the card adaptor apparatus 100 and the UICC 400 of FIG. 4. In particular, the UICC 400 is disposed within the opening 212 of the frame 102 without the use of the auxiliary frame 238. When coupled to the frame 102, a plurality of electrical contacts 500 of the UICC 400 is oriented in a direction away from the first adhesive 216.

The plurality of electrical contacts 500 communicatively couples an integrated circuit of the UICC 400 and host (e.g., a computer, a point of sale terminal, a mobile device, a non-mobile device, a remote terminal, etc.), The host typically employs an input device (e.g., a card reader) to complete a circuit with the electrical contacts to enable communication (e,g., transfer data) between the UICC 400 and the host. In general, a classification of the electrical contacts 500 may be in accordance with the classification of electrical contacts provided by standards ISO/IEC 7816-2 and 7816-3 and/or ETSI TS 102 221. For example, although not depicted herein, the electrical contacts 500 may include a supply voltage contact C1, a reset contact C2, a clock contact C3, a first auxiliary contact C4, a ground contact C5, a single-wire protocol contact C6, an input/output contact C7, and a second auxiliary contact C8.

When disposed in the opening, a surface of the UICC 400 opposite the electrical contacts 500 engages or attaches to the first adhesive 216. As shown in FIG. 5, the UICC 400 fits within the opening 212 with a relatively tight clearance. Additionally or alternatively, a substantially large portion or surface area of the UICC 400 opposite the electrical contacts 500 engages or attaches to the first adhesive 216. Because the first adhesive 216 engages a substantial surface area of the UICC 400, the first adhesive 216 significantly prevents decoupling of the UICC 400 from the frame 102 even when the frame 102 and/or the base 104 flex or bend during insertion and/or removal of the card adaptor apparatus 100 relative to an input device, card reader or other electronic device.

FIG. 6 illustrates a side view of the example card adaptor apparatus 100 of FIG. 4 having the UICC 400 attached thereto. As shown, the frame 102 and the base 104 define a first dimensional thickness 602 and the UICC 400 and the base 104 define a second dimensional thickness 604. Because the first and second adhesives 216 and 226 are relatively thin (e,g., each approximately 0.05 millimeters), the adhesives 216 and 226 allow the frame 102 to comply with a standard thickness tolerance of a plug-in UICC. Thus, the first and second dimensional thicknesses 602 and 604 may be configured to enable the frame 102 conform to UICC form factor standards (e.g., a plug-in UICC) in accordance with current standards provided by ISO/IEC 7810, ISO/IEC 7816-2 and 7816-3 and/or ETSI TS 102 221.

However, in some examples where the UICC 400 is a conforming UICC having a maximum allowable dimensional thickness, an area 606 of the card adaptor apparatus 100 represented by the UICC 400 may slightly deviate from the tolerance thickness provided by some current standards. For example, when the UICC 400 has a maximum dimensional thickness, the second dimensional thickness 604 may be approximately 0.95 millimeters. However, any deviation of the maximum dimensional thickness at the area 606 of the card adaptor apparatus 100 is at substantial distance 608 from a lead-in edge or front end 610 of the card adaptor apparatus 100 and does not cause the lead-in edge 610 of the frame 102 to interfere with (e.g., plastically deform) electrical contacts of an input device during insertion. Further, a slight deviation in the area 606 of the card adaptor apparatus 100 is not sufficient to affect the operation of the card adaptor apparatus 100 and/or the input device when the card adaptor apparatus 100 interacts or interfaces with an input device such as, for example, a card reader.

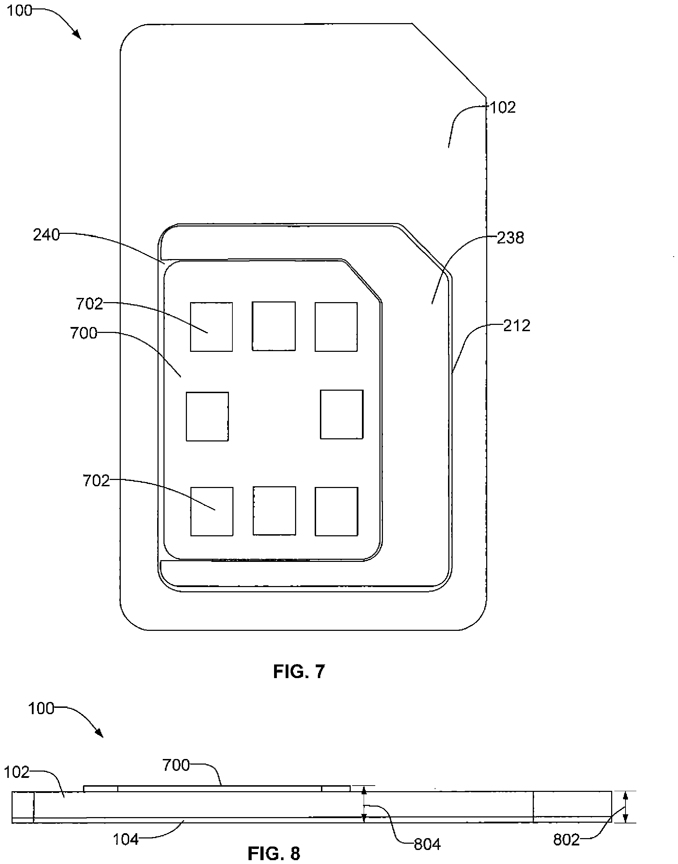

FIG. 7 is a plan view of the example card adaptor apparatus 100 having another UICC 700 coupled to the card adaptor apparatus 100 while the auxiliary frame 238 is positioned in the opening 212. As shown, the UICC 700 has a dimensional profile that is smaller than a dimensional profile of the UICC 400 of FIG. 4. In particular, the UICC 700 is disposed in the second opening 240 of the frame 102 that is defined or provided by the auxiliary frame 238. When coupled to the frame 102, a surface opposite electrical contacts 702 of the UICC 700 engages or attaches to the first adhesive 216. Further, the auxiliary frame 238 also engages or attaches to the frame 102 via the first adhesive 216. The first adhesive 216 significantly prevents decoupling of the UICC 700 and/or the auxiliary frame 238 from the frame 102 even if the frame 102 and/or the base 104 flex or bend during insertion and/or removal of the card adaptor apparatus 100 relative to an input device or card reader. As shown in FIG. 7, the UICC 700 fits in the second opening 240 defined by the auxiliary frame 238 and the frame 102 with a relatively tight fit and/or clearance.

FIG. 8 illustrates a side view of the example card adaptor apparatus 100 of FIG. 7 having the UICC 700 attached thereto. As shown, the base 104, the frame 102 and the auxiliary frame 238 define a first dimensional thickness 802 and the UICC 700 and the base 104 define a second dimensional thickness 804. The dimensional thicknesses 802 and 804 may be configured to comply with standard thickness tolerances of conforming UICCs. For example, the dimensional thicknesses 802 and 804 may comply with standard thickness tolerance for a plug-in UICC.

The card adaptor apparatus 100 enables the frame 102 and the UICC 400 (or the frame 102, the auxiliary frame 238, the UICC 400 or the UICC 700) to bend or flex when the card adaptor apparatus 100 is inserted in an input device or card configured to receive the frame 102. The card adaptor apparatus 100 can bend or flex without causing the respective UICC 400 or UICC 700 from detaching or decoupling from the first adhesive 216 and, thus, the frame 102 and/or the auxiliary frame 238.

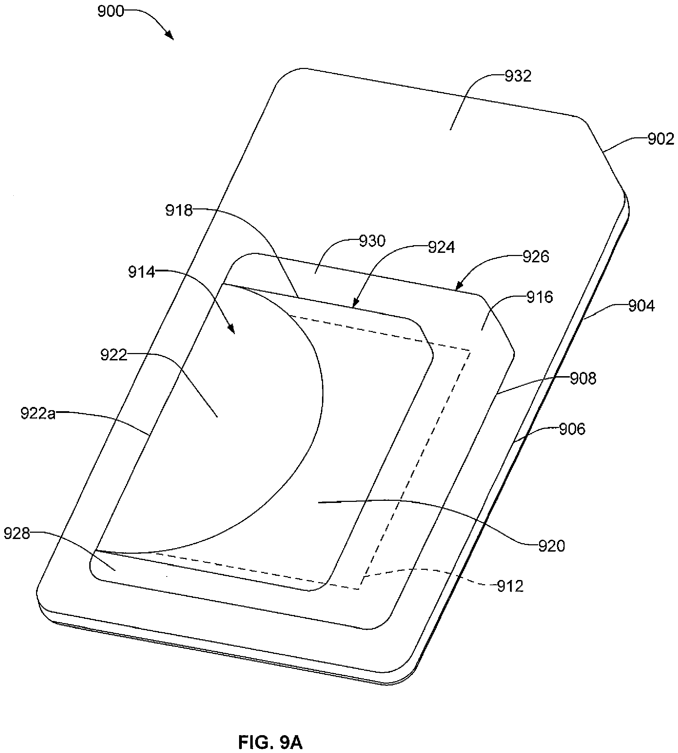

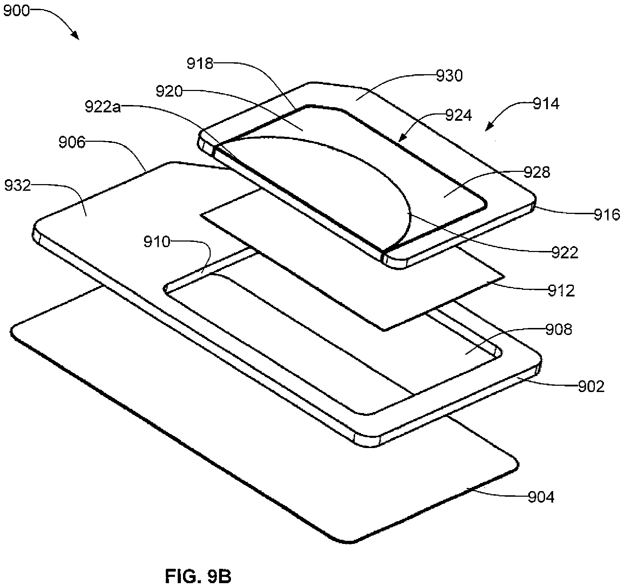

FIG. 9A illustrates another example card adaptor apparatus 900 disclosed herein. FIG. 9B illustrates an exploded view of the example card adaptor apparatus 900. The example card adaptor apparatus 900 of FIG. 9 includes a first adaptor or frame 902 and a base 904. The frame 902 may have an outer perimeter 906 that conforms to a UICC form factor standard such as, for example, a plug-in UICC. The frame 902 also defines an opening or cavity 908 configured to receive a SIM card or UICC of a second configuration. For example, the opening 908 may define an inner perimeter 910 (FIG. 9B) of the frame 902 that conforms to a UICC form factor standard such as, for example, a mini-UICC. The base 904 retains or nests an adhesive 912 relative to the opening 908 of the frame 902 when the base 904 is coupled to the frame 902.

The card adaptor apparatus 900 includes a modular interface 914 to enable at least a first UICC and a second UICC to couple to the frame 902, where the first UICC is different than the second UICC. The modular interface 914 includes a second adaptor or auxiliary frame 916 configured or dimensioned to be positioned in, or nest within, the opening 908 of the frame 902. The auxiliary frame 916 defines a second opening 918 of the frame 902 when the auxiliary frame 916 is coupled to the frame 902, In particular, the second opening 918 defined by the auxiliary frame 916 is relatively smaller than the opening 908 of the frame 902.

In addition, in this example, the modular interface 914 also includes a cover 920 (e.g., a blank frame portion) that is removably coupled to the auxiliary frame 916. The cover 920 may be composed of a material similar to the material of the auxiliary frame 916, the frame 902 and/or the base 904. The cover of the illustrated example is flush mounted relative to the auxiliary frame 916 and the frame 902 to prevent damage to electrical contacts of a card reader if the card adaptor apparatus 900 is coupled to the card reader with the cover 920 attached to the frame 902.

To enable removal of the cover 920 and, thus, the auxiliary frame 916, the cover 920 employs a pull tab 922. In the illustrated example, the cover 920 includes a dimensional profile or shape that is substantially similar to a dimensional shape or profile of the opening 918 defined by the auxiliary frame 916. When positioned in the opening 908 of the frame 902, at least a portion of the cover 920 and at least a portion of the auxiliary frame 916 engage or attach to the adhesive 912 to retain the cover 920 and the auxiliary frame 916 in the opening 908.

To expose the adhesive and/or the opening 908, a user pulls the pull tab 922 in a first direction away from the frame 902 about a bend or crease line 922a to lift the tab away from the cover 920 and a second direction away from the frame 902 and opposite the first direction to pull the cover 920 away from the frame 902. When the pull tab 922 is pulled away from the frame 902, the pull tab 922 causes both the cover 920 and the auxiliary frame 916 to be detached from the adhesive 912 and be removed from the frame 902 as a unitary unit shown in FIG. 9B. If the auxiliary frame 916 is needed, the auxiliary frame 916 is decoupled from the cover 920 and repositioned in the opening 908 of the frame 902. The auxiliary frame 916 may be coupled or attached to the cover 920 via a breakaway feature such as, for example, a tab or a perforation formed at an interface 924 between the cover 920 and the auxiliary frame 916.

In some examples, the pull tab 922 may have a substantially greater flexibility than the frame 902, the base 904 and/or the cover 920. In other words, the pull tab 922 may be composed of a substantially weaker and/or more flexible material than a material of the frame 902, the base 904 and/or the cover 920. IN this manner, if the adaptor apparatus 900 is inserted into an input device or card reader without removing the pull tab 922, the pull tab 922 will not cause damage to, for example, the electrical connectors of the input device or card reader.

Although not shown, in other examples, another pull tab may be attached to the auxiliary frame 916 to facilitate removal of the auxiliary frame 916 relative to the opening 908 of the frame 902. Thus, both the cover 920 and the auxiliary frame 916 would have their dedicated pull tabs.

Alternatively, in other examples, the auxiliary frame 916 may be coupled to the frame 902 via a breakaway feature at an interface 926 between the auxiliary frame 916 and the frame 902. In such examples, a user pulls the pull tab 922 to first remove the cover 920 from the opening 918 of the auxiliary frame 916 and the opening 908 of the frame 902. The pull tab 922 may be composed of a flexible or bendable material different than the material used to form the cover 920. The pull tab 922 may be coupled to the cover 920 via an adhesive having a substantially strong adhesion characteristic to provide a permanent attachment between the pull tab 922 and the cover 920. In the example of FIGS. 9A and 9B, an upper surface 928 of the cover 920 is substantially flush relative to respective upper surfaces 930 and 932 of the auxiliary frame 916 and/or the frame 902. In some examples, an upper surface 930 of the auxiliary frame 916 is substantially flush with an upper surface 932 of the frame 902. Further, in some examples, the upper surface 928 of the cover 920 is substantially flush relative to respective upper surfaces 930 and 932 of the auxiliary frame 916 and/or the frame 902. In this manner, the substantially flush surfaces 928, 930 and/or 932 help prevent damage when inserting the adaptor apparatus 900 without a card or UICC into an input device or card reader. In some examples, to facilitate removal of the cover 920, the upper surface 928 of the cover 920 may be recessed (or raised) relative to the respective upper surfaces 930 and 932 of the auxiliary frame 916 and/or the frame 902.

FIG. 10 is a plan view of the example card adaptor apparatus 900 of FIGS. 9A and 9B. As shown in FIG. 10, the outer perimeter 906 of the frame 902 conforms to a plug-in UICC form factor standard provided by ISO/IEC 7816-2 and 7816-3. As shown in FIG. 10, the frame 902 has a height 1002 of approximately 25 millimeters and a length 1004 of approximately 15 millimeters. The outer perimeter 906 of the frame 902 may include a chamfered edge 1006 forming an angle 1008 relative to horizontal of approximately 135 degrees.

The inner perimeter 910 of the opening 908 as shown in FIG. 10 conforms to a mini-UICC form factor standard provided by ISO/IEC 7816-2 and 7816-3. The opening 908 has a height 1010 of approximately 15.05 millimeters and a width 1012 of approximately 12.05 millimeters. A first edge 1014 of the opening 908 is spaced a distance 1016 of approximately 1.48 millimeters from a first reference 1018 and a second edge 1020 of the opening 908 is spaced a distance 1022 of approximately 1.7 millimeters from a second reference 1024.

The adhesive 912 as shown in the example of FIG. 10 has a height 1026 of approximately 13.4 millimeters and a width 1028 of approximately 10.05 millimeters. Both the adhesive 912 and the opening 908 have respective chamfered edges 1030 and 1032 each forming an angle 1034 of approximately 135 degrees relative to horizontal.

The auxiliary frame 916 as shown in the example of FIG. 10 has a height 1036 of approximately 15 millimeters and a width 1038 of approximately 12 millimeters. A gap 1040 of approximately 0.05 millimeters may be formed at the interface 926 between the outer perimeter of the auxiliary frame 916 and the inner perimeter 910 of the opening 908 of the frame 902.

The cover 920 of the illustrated example of FIG. 10 may have a height 1042 of approximately 12.4 millimeters and a width 1044 of approximately 9.2 millimeters. An embossed gap 1046 may be formed at the interface 924 between the cover 920 and the auxiliary frame 916 of approximately 0.05 millimeters. The second opening 918 provided or defined by the auxiliary frame 916 is substantially equal to the height 1042 and the width 1044 of the cover 920.

As shown in FIG. 10, the opening 918 defined by the height 1042 and the width 1044 of the cover 920 is a non-conforming dimensional opening. For example, the opening 918 provided by the auxiliary frame 916 does conform to current standards provided by, for example, the International Standard Organization and/or the European Telecommunications Standards Institute. However, the opening 918 defined by the auxiliary frame 916 may conform to a future form factor standard provided by the International Standard Organization and/or the European Telecommunications Standards Institute.

In other examples, the opening 918 of the auxiliary frame 916 may have a height 1042 of between approximately 11.8 and 12.8 millimeters and a width 1044 of between approximately 8.7 and 8.9 millimeters. In other examples, the height 1042 may be between about 10.9 and 11.1 millimeters and the width 1044 may be between about 8.9 and 9.7 millimeters. Alternatively, the height 1010 and the width 1012 of the opening 908 of the frame 902 may be configured with these dimensional values.

FIG. 11 is a cross-sectional view of the example card adaptor apparatus 900 taken along line 11-11 of FIG. 10. As shown in the example of FIG. 11, the card adaptor apparatus 900 has a dimensional thickness 1102 of approximately 0.76 millimeters plus or minus a tolerance of approximately 0.05 millimeters.

FIG. 12 is an enlarged, sectional view of the example card adaptor apparatus 900 shown in FIG. 11. As shown in the example of FIG. 12, the cover 920 has a dimensional thickness 1202 of approximately between 0.7 and 0.6 millimeters or, preferably, 0.65 millimeters. The adhesive 912 has a dimensional thickness 1204 of approximately 0.05 millimeters and the base 904 has dimensional thickness 1206 of approximately between 0.03 millimeters and 0.1 millimeters or, preferably, 0.05 millimeters. Although the section view shown in FIG. 12 does not include the frame 902, the frame 902 is substantially flush or aligned with the cover 920 as most clearly shown in FIG. 11 and, therefore, also has a dimensional thickness of approximately 0.6 millimeters.

FIG. 13 illustrates another example card adaptor apparatus 1300. The card adaptor apparatus 1300 includes a frame 1302 defining an opening 1304 and a base 1306 to retain an adhesive 1308 relative to the opening 1304. The card adaptor apparatus 1300 includes a modular interface 1310 positioned or nested in the opening 1304 of the frame 1302. The modular interface 1310 of the illustrated example includes a cover 1312 and an auxiliary frame or secondary adaptor 1314. In contrast to the card adaptor apparatus 900 of FIGS. 9A and 9B, the auxiliary frame 1314 is attached to the frame 1302 via a breakaway feature 1316 (e.g., tabs or perforations). The cover 1312 of the illustrated example is attached to the auxiliary frame 1314 via a breakaway feature 1318 (e.g., tabs or perforations). A pull tab 1320 is coupled only to the cover 1312 so that when a force is applied to the pull tab 1320 in a direction away from the frame 1302, the force causes the cover 1312 to detach or breakaway from the auxiliary frame 1314. To remove the auxiliary frame 1314 from the frame 1302, a second force is applied to the auxiliary frame 1314 to detach or decouple the auxiliary frame 1314 from the frame 1302. Additionally or alternatively, the pull tab 1320 may be composed of a relatively weaker or more flexible material than the cover 1312 and/or the frame 1302 to help reduce damage to an input device (e.g., card reader electrical contacts or springs) if the adaptor apparatus 1300 is inserted into the input device having the pull tab 1320 attached to the cover 1312. Additionally or alternatively, the frame 1302, the cover 1312 and the auxiliary frame 1314 are substantially flush mounted (e.g., their respective upper surfaces opposite the base 1306 being substantially even) to help prevent damage to an input device if the adaptor apparatus 1300 is inserted into the input device while having the cover 1312 and/or the auxiliary frame 1314 attached to the frame 1302.

FIG. 14 illustrates another example UICC apparatus 1400. The card adaptor apparatus 1400 includes a frame or adaptor 1402 defining an opening 1404, and a base 1406 to position or nest an adhesive 1408 relative to the opening 1404. The card adaptor apparatus 1400 includes a cover 1410 to protect the adhesive 1408 during non use of the card adaptor apparatus 1400. The cover 1410 employs a pull tab 1412 to facilitate removal of the cover 1410 relative to the frame 1402 to expose the opening 1404 and the adhesive 1408, Additionally or alternatively, the pull tab 1412 may be composed of a relatively weaker or more flexible material than the cover 1410 and/or the frame 1402 to help reduce damage to an input device (e.g., card reader electrical contacts or springs) if the adaptor apparatus 1400 is inserted into the input device having the pull tab 1412 attached to the cover 1410. Additionally or alternatively, the frame 1402, the cover 1410 and the pull tab 1412 are substantially flush mounted to help prevent damage to an input device if the adaptor apparatus 1400 is inserted into the input device while having the cover 1410 and/or the pull tab 1412 attached to the frame 1402.

Unlike the card adaptor apparatus 100, 900 and 1300 described above, the card adaptor apparatus 1400 of FIG. 14 does not employ a modular interface (e.g., the modular interfaces 236, 914, 1310 of FIGS. 2, 9A and 13). Instead, the card adaptor apparatus 1400 provides a dedicated card adaptor apparatus to receive a UICC sized to be positioned relative to the opening 1404. For example, the opening 1404 may have a dimensional profile (e.g., a height 1414 of approximately 15 millimeters and width 1416 of approximately 12 millimeters) to receive a first UICC such as, for example, a conforming mini-UICC. In other examples, the opening 1404 may have a dimensional profile (e.g., a height 1414 of between approximately 13.0 and 15.0 millimeters and a width 1416 of between approximately 11 millimeters and 13 millimeters) to receive a second UICC such as, for example, a non-conforming UICC.

The example card adaptor apparatus 100, 900 and 1300 described herein may not include the respective modular interfaces 236, 914, 1310 of FIGS. 2, 9A and 13. Instead, each of the card adaptor apparatus 100, 900 and 1300 may be configured to receive a single dedicated UICC or SIM card.

For example, FIG. 15 illustrates a card adaptor apparatus 1500 similar to the card adaptor apparatus 900 of FIGS. 9A and 9B, but implemented without a modular interface such as the modular interface 914 of FIGS. 9A and 9B. Instead of a modular interface, a cover 1502 is disposed within an opening 1504 defined by a frame 1506. The opening 1504 may have a dimensional profile (e,g., a height 1508 of approximately 15 millimeters and width 1510 of approximately 12 millimeters) to receive a first UICC such as, for example, a conforming mini-UICC.

FIG. 16 illustrates a card adaptor apparatus 1600 similar to the card adaptor apparatus 900 of FIGS. 9A and 9B, but implemented without a modular interface such as the modular interface 914 of FIGS. 9A and 9B. Instead of a modular interface, a cover 1602 is disposed within an opening 1604 defined by a frame 1606. The opening 1604 may have a dimensional profile (e.g., a height 1608 of between approximately 13.0 and 15.0 millimeters and a width 1610 of between approximately 11 millimeters and 13 millimeters) to receive a second UICC such as, for example, a non-conforming UICC.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A card adaptor apparatus comprising:
a first frame, the first frame having an outer perimeter configured to define a first card, the first frame defining an opening configured to receive a second card having a dimensional profile that is smaller than a dimensional profile of the first card; and
a first adhesive to substantially span across an entire opening of the first frame to retain the second card in the opening of the first frame,

2. The card adaptor apparatus of claim 1, further comprising a second frame, the second frame to be positioned in the opening of the first frame to configure the opening to receive a third card, the third card having a dimensional profile that is smaller than the dimensional profiles of the second card and the first card.

3. The card adaptor apparatus of claim 1, further comprising a cover coupled to a first surface of the first frame, the cover to protect the first adhesive from particulate or contaminate when the second card is not disposed within the opening of the first frame.

4. The card adaptor apparatus of claim 3, further comprising a base coupled to the frame, wherein the frame, the base and the cover define a dimensional thickness that is greater than a dimensional thickness defined by an opening of an input device such that the adaptor apparatus cannot be inserted into the opening of the input device when the cover is coupled to the frame.

5. The card adaptor apparatus of claim 3, wherein the cover comprises a pull tab to facilitate removal of the cover relative to the first surface of the first frame.

6. The card adaptor apparatus of claim 1, further comprising a base coupled to a first surface of the first frame to retain the first adhesive relative to the opening of the first frame.

7. The card adaptor apparatus of claim 6, further comprising a second adhesive to attach the base to the first surface of the first frame,
wherein the second adhesive substantially spans an entire surface area of the first surface and does not overlap the opening of the first frame, and/or
wherein the first and second adhesives are positioned between the first surface of the first frame and the base, and/or
wherein the second adhesive is substantially stronger relative to the first adhesive, and/or
wherein the second adhesive includes a second opening sized larger than the opening of the first frame to allow the first adhesive to be in communication with the opening of the first frame when the first and second adhesives are coupled to the first frame.

8. A card adaptor apparatus comprising:
a first frame having a modular interface to receive at least a first card and a second card, the first card being larger than the second card;
a first adhesive adjacent the modular interface to retain the at least one of the first card or the second card relative to the first frame;
a base to maintain the first adhesive relative to the modular interface; and
a second adhesive to attach the base to the first frame, the second adhesive positioned adjacent the first adhesive.

9. The card adaptor apparatus of claim 8, wherein an outer perimeter of the first frame defines a third card, the third card having a dimensional profile that is greater than a dimensional profile of the first card and the second card.

10. The card adaptor apparatus of claim 8, wherein the modular interface comprises a second frame removably coupled to the first frame, wherein the first frame provides a first opening to receive the first card with a relatively tight fit connection when the second frame is removed from the first frame, and wherein the second frame provides a second opening to receive the second card with a relatively tight fit connection when the second frame is coupled to the first frame.

11. The card adaptor apparatus of claim 8, wherein the second adhesive does not overlap with the modular interface.

12. The card adaptor apparatus of claim 8, further comprising a cover coupled to the first frame to cover the first adhesive and the modular interface, the cover having a pull tab to enable a user to remove the cover from the first frame to expose the modular interface and the first adhesive, wherein the cover substantially covers the modular interface such that removal of the cover from the first frame causes the modular interface to decouple from the first frame when the cover is removed from the first frame.

13. A method of forming a card adaptor apparatus comprising:
providing a first frame having an opening configured to receive a first card;
positioning a first adhesive relative to the opening such that the first adhesive spans substantially across the opening;
providing a base to retain the first adhesive relative to the opening of the first frame; and
attaching the base to the first frame via a second adhesive, the second adhesive being different than the first adhesive, and the second adhesive does not overlap with the first adhesive and the opening.

14. The method of claim 13, further comprising forming an inner perimeter defined by the opening in accordance with a first UICC form factor standard and forming an outer perimeter of the first frame in accordance with a second UICC form factor standard or, alternatively,
further comprising covering the opening with a cover to protect the first adhesive from particulate when the first frame is not in use.

15. The method of claim 14, further comprising positioning a second frame in the opening of the first frame, the second frame to define a second opening configured to receive a third UICC, the third UICC having a dimensional profile that is smaller than a dimensional profile of the first UICC.
